(19) Europäisches Patentamt / European Patent Office / Office européen des brevets

(11) **EP 4 245 738 A1**

(12) **EUROPEAN PATENT APPLICATION**

(43) Date of publication:
**20.09.2023 Bulletin 2023/38**

(21) Application number: **22214516.1**

(22) Date of filing: **19.12.2022**

(51) International Patent Classification (IPC):
**C04B 35/26** (2006.01)  **C04B 35/64** (2006.01)
**C01G 49/00** (2006.01)  **H01F 1/34** (2006.01)

(52) Cooperative Patent Classification (CPC):
**C04B 35/2658; C01G 49/0072; C04B 35/64;**
**H01F 1/344;** C04B 2235/3208; C04B 2235/3244;
C04B 2235/3251; C04B 2235/3277;
C04B 2235/3298; C04B 2235/3409;
C04B 2235/3418; C04B 2235/421;
C04B 2235/5427; C04B 2235/5436;
C04B 2235/602;                          (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **14.03.2022 JP 2022039675**

(71) Applicant: **Proterial, Ltd.**
**Tokyo 135-0061 (JP)**

(72) Inventors:
• **MASUMITSU, Hayato**
  **Tokyo, 1350061 (JP)**
• **MIYOSHI, Yasuharu**
  **Tokyo, 1350061 (JP)**
• **KOYUHARA, Norikazu**
  **Tokyo, 1350061 (JP)**

(74) Representative: **Diehl & Partner**
**Patent- und Rechtsanwaltskanzlei mbB**
**Erika-Mann-Straße 9**
**80636 München (DE)**

(54) **SINTERED MNZN FERRITE AND ITS PRODUCTION METHOD**

(57)     A sintered MnZn ferrite comprising as main components 53.5 to 54.3% by mol of Fe calculated as $Fe_2O_3$, and 4.2 to 7.2% by mol of Zn calculated as ZnO, the balance being Mn calculated as MnO, and comprising as subcomponents 0.003 to 0.018 parts by mass of Si calculated as $SiO_2$, 0.03 to 0.21 parts by mass of Ca calculated as $CaCO_3$, 0.40 to 0.50 parts by mass of Co calculated as $Co_3O_4$, 0 to 0.09 parts by mass of Zr calculated as $ZrO_2$, and 0 to 0.015 parts by mass of Nb calculated as $Nb_2O_5$, per 100 parts by mass in total of the main components (calculated as the oxides), $C_{(Zn)}/C_{(Co)}$ being 9.3 to 16.0 wherein $C_{(Zn)}$ is the content of Zn contained as a main component (% by mol calculated as ZnO in the main components), and $C_{(Co)}$ is the content of Co contained as a sub-component (parts by mass calculated as $Co_3O_4$ per 100 parts by mass in total of the main components).

Fig. 1

EP 4 245 738 A1

(Cont. next page)

(52) Cooperative Patent Classification (CPC): (Cont.)
C04B 2235/6562; C04B 2235/6567;
C04B 2235/6584; C04B 2235/72;
C04B 2235/724; C04B 2235/726;
C04B 2235/727; C04B 2235/77; C04B 2235/786

**Description**

FIELD OF THE INVENTION

The present invention relates to a sintered MnZn ferrite used for magnetic cores of electronic devices such as transformers, inductors, reactors and choke coils in various power supply devices, and its production method.

BACKGROUND OF THE INVENTION

Electric vehicles such as battery electric vehicles (BEVs), hybrid electric vehicles (HEVs) and plug-in hybrid electric vehicles (PHEVs), which have become used widely in recent years, are equipped with high-power electric motors and chargers, etc. Electronic components that can withstand high voltage and large current are used for them.
Magnetic core materials used for electronic devices such as transformers suffer core loss (also referred to as power loss) in power conversion. Such core loss causes deterioration in power-converting efficiency, and is converted into heat which contributes to an increase in ambient temperature as a heat source, and likely deteriorates reliability in electronic devices. Accordingly, magnetic core materials with low core loss in a use environment are required.
MnZn ferrite which is designed so that the temperature at which core loss is minimized is 100°C or lower (for example, about 80°C) is generally used for electronic components in home electronic appliances, etc. However, when such magnetic core materials are used in a high-temperature environment of 100°C or higher, such as in the vicinity of an engine, their core loss becomes high, further increasing the ambient temperature, thereby causing thermal runaway, as well as deteriorating power-converting efficiency and reliability as described above.
When power supply devices for automotive applications are equipped with a water-cooling mechanism for heat radiation to prevent the ambient temperature from elevating up to 100°C or higher, their use temperature can be lowered to 60°C or lower. However, when the power supply devices are operated at temperatures of 60°C or lower, magnetic cores used herein exhibit rather higher core loss, resulting in large deterioration in power-converting efficiency. Therefore, MnZn ferrite having low core loss in a wide temperature range from 100°C to 60°C or lower is desired.
As MnZn ferrite having low core loss in a wide temperature range, for example, WO 2017/164350 discloses MnZn ferrite comprising as main components 53 to 54% by mol of Fe (calculated as $Fe_2O_3$), and 8.2 to 10.2% by mol of Zn (calculated as ZnO), the balance being Mn (calculated as MnO); further comprising as sub-components more than 0.001 parts by mass and 0.015 parts by mass or less of Si (calculated as $SiO_2$), more than 0.1 parts by mass and 0.35 parts by mass or less of Ca (calculated as $CaCO_3$), 0.4 parts by mass or less (not including 0) of Co (calculated as $Co_3O_4$), 0.1 parts by mass or less (including 0) of Ta (calculated as $Ta_2O_5$), 0.1 parts by mass or less (including 0) of Zr (calculated as $ZrO_2$), and 0.05 parts by mass or less (including 0) of Nb (calculated as $Nb_2O_5$), the total amount of $Ta_2O_5$, $ZrO_2$ and $Nb_2O_5$ being 0.1 parts by mass or less (not including 0), per 100 parts by mass in total of the main components (calculated as the oxides); and having a volume resistivity of 8.5 $\Omega\cdot m$ or more at room temperature, an average crystal grain size of 7 $\mu m$ to 15 $\mu m$, core loss of 420 $kW/m^3$ or less between 23°C and 140°C at a frequency of 100 kHz and an exciting magnetic flux density of 200 mT, and initial permeability $\mu i$ of 2800 or more at a frequency of 100 kHz and at 20°C.
However, MnZn ferrite described in WO 2017/164350 has core loss which is low in a relatively wide temperature range and minimum near 100°C, but tends to have high core loss at temperatures of 60°C or lower. Therefore, MnZn ferrite exhibiting lower core loss in a temperature range of 60°C or lower is required.
JP 2001-220146 A discloses a low-loss ferrite comprising 52.0 to 55.0 mol% of $Fe_2O_3$, 32.0 to 44.0 mol% of MnO and 4.0 to 14.0 mol% of ZnO as main components, and comprising 200 to 1000 ppm of CaO, 50 to 200 ppm of $SiO_2$, 500 ppm or less of $Bi_2O_3$, 200 to 800 ppm of $Ta_2O_5$ and 4000 ppm or less of CoO as sub-components, and describes that a temperature at which power loss is minimized can be controlled to 100°C or higher.
However, MnZn ferrite described in JP 2001-220146 A tends to have high core loss at temperatures of 60°C or lower. Therefore, MnZn ferrite exhibiting lower core loss in a temperature range of 60°C or lower is required.

OBJECT OF THE INVENTION

Accordingly, an object of the present invention is to provide a sintered MnZn ferrite having low core loss in a wide temperature range, particularly even at as low temperatures as 60°C or lower, and its production method.

SUMMARY OF THE INVENTION

In view of the above object, the present inventors have found that by optimizing compositions of main components comprising Fe, Zn and Mn, optimizing the amount of $Co_3O_4$ which is an additive contained as a sub-component so as to be dissolved in crystal grains, and regulating a ratio $C_{(Zn)}/C_{(Co)}$ of the content of Zn $[C_{(Zn)}]$ to the content of Co

$[C_{(Co)}]$ in a particular range, a sintered MnZn ferrite having a reduced crystal magnetic anisotropy and flat temperature characteristics, particularly having low core loss even at as low temperatures as 60°C or lower, can be obtained. The present invention has been completed based on such finding.

Thus, a sintered MnZn ferrite of the present invention comprises as main components 53.5 to 54.3% by mol of Fe calculated as $Fe_2O_3$, and 4.2 to 7.2% by mol of Zn calculated as ZnO, the balance being Mn calculated as MnO, and comprises as sub-components 0.003 to 0.018 parts by mass of Si calculated as $SiO_2$, 0.03 to 0.21 parts by mass of Ca calculated as $CaCO_3$, 0.40 to 0.50 parts by mass of Co calculated as $Co_3O_4$, 0 to 0.09 parts by mass of Zr calculated as $ZrO_2$, and 0 to 0.015 parts by mass of Nb calculated as $Nb_2O_5$, per 100 parts by mass in total of the main components (calculated as the oxides), $C_{(Zn)}/C_{(Co)}$ being 9.3 to 16.0 wherein $C_{(Zn)}$ is the content of Zn contained as a main component (% by mol calculated as ZnO in the main components), and $C_{(Co)}$ is the content of Co contained as a sub-component (parts by mass calculated as $Co_3O_4$ per 100 parts by mass in total of the main components).

In the sintered MnZn ferrite of the present invention, it is preferable that the content of Si is 0.006 to 0.012 parts by mass calculated as $SiO_2$, the content of Ca is 0.045 to 0.18 parts by mass calculated as $CaCO_3$, the content of Zr is 0.03 to 0.06 parts by mass calculated as $ZrO_2$, and the content of Nb is 0.006 to 0.012 parts by mass calculated as $Nb_2O_5$.

The sintered MnZn ferrite of the present invention preferably has a density of 4.80 $g/cm^3$ or more.

The sintered MnZn ferrite of the present invention preferably has an average crystal grain size of 6 $\mu$m or more and 11 $\mu$m or less.

The sintered MnZn ferrite of the present invention preferably has maximum core loss $Pcv_{max}$ of 1000 $kW/m^3$ or less in a temperature range of 23 to 100°C at a frequency of 200 kHz and an exciting magnetic flux density of 200 mT.

The sintered MnZn ferrite of the present invention preferably has initial permeability $\mu$i of 2700 or more.

A method of the present invention for producing the sintered MnZn ferrite, comprises

a step of molding a raw material powder for MnZn ferrite to obtain a green body, and a step of sintering the green body, the sintering step comprising a step of keeping a high temperature of higher than 1255°C and 1315°C or lower in an atmosphere having an oxygen concentration of more than 0.1% by volume and 3% by volume or less for 1 to 6 hours.

EFFECTS OF THE INVENTION

Because the sintered MnZn ferrite of the present invention has low core loss in a wide temperature range, particularly even at as low temperatures as 60°C or lower, when used for a magnetic core of power supply devices (DC-DC converters) in automotive applications equipped with a water-cooling mechanism for heat radiation, it can significantly increase power-converting efficiency, resulting in improvement in electric efficiency and fuel efficiency of EVs.

BRIEF DESCRIPTION OF THE DRAWINGS

Fig. 1 is a graph schematically showing temperature conditions in a typical sintering step for obtaining a sintered MnZn ferrite of the present invention.
Fig. 2 is a graph showing the temperature dependency of the core losses of an example of the sintered MnZn ferrite of the present invention (Example 23) and the sintered MnZn ferrite described in WO 2017/164350 (Reference Example 1).

DESCRIPTION OF THE PREFERRED EMBODIMENTS

Embodiments of the present invention will be described in detail below, however, the present invention is not restricted thereto, and modifications may be made properly within the scope of the technical idea of the present invention.

[1] Sintered MnZn ferrite

(A) Composition

A sintered MnZn ferrite of the present invention comprises Fe, Mn and Zn as main components, and Si, Ca and Co as sub-components. The sintered MnZn ferrite of the present invention may further contain Zr and/or Nb as sub-components. The main components are elements mainly constituting spinel ferrite, and the sub-components are elements assisting the formation of spinel ferrite. Although Co constitutes spinel ferrite, Co is treated as a sub-component in the present invention because its content is significantly lower than those of the main components.

(1) Main components

In order to reduce the core loss Pcv at a desired temperature, it is necessary to appropriately adjust the amounts of metal ions exhibiting positive crystal magnetic anisotropy constants K1 and the amounts of metal ions exhibiting negative crystal magnetic anisotropy constants K1 both constituting the spinel ferrite. However, the degree of freedom in selection of the composition is small because it is necessary to meet requirements for other magnetic properties than the core loss Pcv, such as a saturation magnetic flux density Bs, a Curie temperature Tc, and initial permeability $\mu$i. Further, in order to keep the core loss small in a wide temperature range, it is necessary to set a temperature at which the core loss is minimized. Accordingly, to have a saturation magnetic flux density Bs of 500 mT or more, a Curie temperature Tc of 230°C or higher, and initial permeability $\mu$i of 1500 or more so that cores for electronic devices can withstand high voltage and large current at high temperatures, and to have the temperature at which core loss is minimized in a range of 80 to 120°C, the composition of the main components is 53.5 to 54.3% by mol of Fe calculated as $Fe_2O_3$, and 4.2 to 7.2% by mol of Zn calculated as ZnO, the balance being Mn calculated as MnO.

(a) Fe: 53.5 to 54.3% by mol (calculated as $Fe_2O_3$)

When the content of Fe is less than 53.5% by mol, the temperature at which core loss is minimized becomes high, resulting in higher core loss on the low temperature side, so that the effect of reducing core loss in the temperature range of 23 to 100°C cannot be sufficiently obtained. When exceeding 54.3% by mol, the temperature at which core loss is minimized is lowered, the core loss on the high temperature side increases, and the effect of reducing core loss in the temperature range of 23 to 100°C cannot be sufficiently obtained. When the content of Fe is 53.5 to 54.3% by mol, the effect of reducing core loss in the temperature range of 23 to 100°C can be sufficiently obtained. The lower limit of the Fe content is preferably 53.6% by mol. On the other hand, the upper limit of the Fe content is preferably 54.2% by mol.

(b) Zn: 4.2 to 7.2% by mol (calculated as ZnO)

When the content of Zn is 4.2 to 7.2% by mol, temperature change of the core loss is small, and sufficient saturation magnetic flux density is obtained. The lower limit of the Zn content is preferably 4.3% by mol, and more preferably 4.4% by mol. On the other hand, the upper limit of the Zn content is preferably 7.1% by mol, and more preferably 7.0% by mol.

(c) Mn: balance (calculated as MnO)

The content of Mn is the balance obtained by subtracting the content of Fe and the content of Zn from the total amount of the main components (Fe, Zn and Mn).

(2) Sub-components

The sintered MnZn ferrite of the present invention contains at least Si, Ca and Co, and optionally contains Zr and/or Nb, as sub-components. Co is easily dissolved in crystal grains, and Ca, Si, Zr and Nb are easily segregated in crystal grain boundaries. The composition of the sub-components is expressed in parts by mass per 100 parts by mass in total of the main components (calculated as the oxides).

(a) Si: 0.003 to 0.018 parts by mass (calculated as $SiO_2$)

Si segregates in grain boundaries to insulate the crystal grain (increase grain boundary resistance), and reduces relative loss factor tan $\delta/\mu$i, thereby reducing eddy current loss. As a result, the core loss of the sintered MnZn ferrite is reduced in the high frequency range. When the content of Si is too small, the effect of enhancing the grain boundary resistance is small, and when the content of Si is too large, crystal enlargement is induced reversely to deteriorate the core loss.
When 0.003 to 0.018 parts by mass of Si calculated as $SiO_2$ is contained, grain boundary resistance sufficient to reduce eddy current loss can be secured in combination with other sub-components, which can result in the sintered MnZn ferrite having low loss in a high frequency range of 300 kHz or more. The lower limit of the Si content is preferably 0.004 parts by mass, and more preferably 0.006 parts by mass, calculated as $SiO_2$. On the other hand, the upper limit of Si content is preferably 0.015 parts by mass, and more preferably 0.012 parts by mass, calculated as $SiO_2$.

(b) Ca: 0.03 to 0.21 parts by mass (calculated as CaCO$_3$)

Ca segregates in grain boundaries to insulate the crystal grain (increase grain boundary resistance), and reduces relative loss factor tan δ/μi, thereby reducing eddy current loss. As a result, the core loss of the sintered MnZn ferrite is reduced in the high frequency range. When the content of Ca is too small, the effect of enhancing the grain boundary resistance is small, and when the content of Ca is too large, crystal enlargement is induced reversely to deteriorate the core loss.

When 0.03 to 0.21 parts by mass of Ca calculated as CaCO$_3$ is contained, grain boundary resistance sufficient to reduce eddy current loss can be secured in combination with other sub-components, which can result in the low loss in a high frequency range of 300 kHz or more. The lower limit of the Ca content is preferably 0.04 parts by mass, and more preferably 0.045 parts by mass, calculated as CaCO$_3$. On the other hand, the upper limit of the Ca content is preferably 0.19 parts by mass, and more preferably 0.18 parts by mass, calculated as CaCO$_3$.

(c) Co: 0.40 to 0.50 parts by mass (calculated as Co$_3$O$_4$)

Co is an element which is easily dissolved in crystal grains and effective to improve the temperature dependence of core loss. Co$^{2+}$ as a metal ion having a positive crystal magnetic anisotropy constant K1 together with Fe$^{2+}$ has an effect of adjusting the temperature at which the core loss is minimized. Also, Co reduces a residual magnetic flux density Br to reduce the hysteresis loss Ph. On the other hand, since Co$^{2+}$ has a larger crystal magnetic anisotropy constant K1 than Fe$^{2+}$, when the content of Co is too large, a magnetization curve tends to be a Perminver type, and a crystal magnetic anisotropy constant on the low temperature side is too large on the positive side, resulting in remarkable increase of the loss in the low temperature range, thereby the temperature dependence of the core loss is also deteriorated. On the other hand, when the content of Co is too low, the effect of improving the temperature dependence is small.

When 0.40 to 0.50 parts by mass of Co calculated as Co$_3$O$_4$ is contained, core loss in the practical temperature range can be reduced in combination with other sub-components, and the temperature dependence can be improved. The lower limit of the Co content is preferably 0.41 parts by mass, and more preferably 0.42 parts by mass, calculated as Co$_3$O$_4$. On the other hand, the upper limit of the Co content is preferably 0.49 parts by mass, and more preferably 0.48 parts by mass, calculated as Co$_3$O$_4$.

(d) Zr: 0 to 0.09 parts by mass (calculated as ZrO$_2$)

0 to 0.09 parts by mass of Zr calculated as ZrO$_2$ mainly segregates in grain boundary layer together with Si and Ca to increase grain boundary resistance, thereby contributing to low loss, and also reducing a core loss change ratio P. When the content of Zr is too large, coarse grains grow and the core loss increases. Therefore, the upper limit of the Zr content is 0.09 parts by mass calculated as ZrO$_2$. The upper limit of the Zr content is preferably 0.08 parts by mass, and more preferably 0.06 parts by mass, calculated as ZrO$_2$. On the other hand, the lower limit of the Zr content may be 0 parts by mass (not contained), but is preferably 0.02 parts by mass, and more preferably 0.03 parts by mass, calculated as ZrO$_2$.

(e) Nb: 0 to 0.015 parts by mass (calculated as Nb$_2$O$_5$)

Nb mainly segregates in grain boundary layer together with Si and Ca to increase grain boundary resistance, thereby contributing to low loss. When the content of Nb is too large, coarse grains grow and the core loss increases. Therefore, the upper limit of the Nb content is 0.015 parts by mass calculated as Nb$_2$O$_5$. The upper limit of the Nb content is preferably 0.014 parts by mass, and more preferably 0.012 parts by mass, calculated as Nb$_2$O$_5$. On the other hand, the lower limit of the Nb content may be 0 parts by mass (not contained), but is preferably 0.003 parts by mass, and more preferably 0.006 parts by mass, calculated as Nb$_2$O$_5$.

(f) Other sub-components

Since Ta segregates at the grain boundary layer to increase grain boundary resistance, 0.05 parts by mass of Ta may be contained as the upper limit calculated as Ta$_2$O$_5$. When the content of Ta is too large, Ta penetrates into crystal grains and increases the core loss of the sintered MnZn ferrite. By containing 0 to 0.05 parts by mass of Ta calculated as Ta$_2$O$_5$, grain boundary resistance sufficient to reduce eddy current loss can be secured, and hysteresis loss and residual loss are reduced particularly at a high temperature (100°C) in a high frequency range of 500 KHz or more, and thereby low loss in a wide temperature range in a high frequency range is achieved. When Ta is contained, the lower limit of its content may be 0 parts by mass (not contained), but is preferably 0.01 parts by mass calculated as Ta$_2$O$_5$. On the other hand, the upper limit of the Ta content is preferably 0.04 parts by mass, and more preferably 0.03 parts by mass, calculated as $Ta_2O_5$.

Among the sub-components, although Si exclusively segregates in grain boundaries and triple points, Ca, Zr and Nb are dissolved in spinel phase in the course of the sintering step, and may be partly dissolved after sintering and remain in the crystal grains in some cases. When the contents of Ca, Zr and Nb dissolved in the spinel phase increase, the resistance in the crystal grain increases, and a volume resistivity $\rho$ is increased. However, the contents of Ca, Zr and Nb in the grain boundaries relatively decrease. To obtain a sintered MnZn ferrite having low core loss by achieving a high volume resistivity, it is effective to increase the resistance in crystal grains and to form high-resistance grain boundaries by appropriately adjusting the contents of Ca, Zr and Nb dissolved in spinel phase and segregated in crystal grain boundaries. Such adjustment can be carried out by controlling sintering temperature and sintering atmosphere as described later.

(3) Composition parameter $C_{(Zn)}/C_{(Co)}$

The composition parameter $C_{(Zn)}/C_{(Co)}$ is 9.3 to 16.0 wherein $C_{(Zn)}$ is the content of Zn contained as a main component (% by mol calculated as ZnO in the main components), and $C_{(Co)}$ is the content of Co contained as a sub-component (parts by mass calculated as $Co_3O_4$ per 100 parts by mass in total of the main components). In addition to the above-mentioned composition ranges of the main components and the sub-components, limiting the ratio of the Zn content to the Co content to the above range can provide MnZn ferrite with lower core loss particularly in a temperature range of 60°C or lower can be obtained. When $C_{(Zn)}/C_{(Co)}$ is less than 9.3 or more than 16.0, temperature change of the core loss is large, and core loss in a temperature range of 60°C or lower is high. The lower limit of $C_{(Zn)}/C_{(Co)}$ is preferably 10, and more preferably 11. On the other hand, the upper limit of $C_{(Zn)}/C_{(Co)}$ is preferably 15.5.

(4) Impurities

Raw materials constituting the sintered MnZn ferrite may contain sulfur S, chlorine Cl, phosphorus P, boron B, etc. as impurities. Particularly, S generates a compound with Ca and the compound segregates as foreign matter at the grain boundaries, thereby decreasing the volume resistivity $\rho$ and increasing the eddy current loss. It is empirically known that reduction in core loss and improvement in magnetic permeability can be obtained by decreasing these impurities. Therefore, for further reduction of the core loss, it is preferable to be 0.03 parts by mass or less of S, 0.01 parts by mass or less of Cl, 0.001 parts by mass or less of P, and 0.0001 parts by mass or less of B, per 100 parts by mass in total of the main components (calculated as the oxides). Further, since the addition of Bi may cause deterioration of a furnace, the content of Bi is less than 0.01 parts by mass, preferably 0.001 parts by mass or less, and more preferably zero, calculated as $Bi_2O_5$.

The quantitative determination of the main components, the sub-components, and the impurities can be conducted by fluorescent X-ray analysis and ICP emission spectral analysis. Qualitative analysis of the contained elements is previously carried out by fluorescent X-ray analysis, and then the contained elements are quantified by a calibration curve method comparing with a standard sample.

(B) Properties and characteristics

(1) Density of sintered body

The sintered MnZn ferrite preferably has a density of 4.80 g/cm$^3$ or more. When the density of the sintered body is less than 4.80 g/cm$^3$, the mechanical strength is poor, likely resulting in chipping and cracking. The density of the sintered body is more preferably 4.85 g/cm$^3$ or more. It is noted that the density of the sintered body is determined by the method described in the following examples.

(2) Average crystal grain size

The sintered MnZn ferrite preferably has an average crystal grain size of 6 to 11 $\mu$m. The average crystal grain size of more than 11 $\mu$m provides insufficient effect of reducing eddy current loss and residual loss, and increased core loss in a high frequency range of 500 KHz or less. On the other hand, the average crystal grain size of less than 6 $\mu$m makes grain boundaries act as pinning points of magnetic domain walls, inducing a decrease in permeability and an increase in core loss due to a demagnetizing field. The average crystal grain size is more preferably 8 to 10 $\mu$m. It is noted that the average crystal grain size is determined by the method described in the following examples.

The sintered MnZn ferrite preferably has initial permeability $\mu$i of 2700 or more.

The sintered MnZn ferrite preferably has core loss of 1000 kW/m$^3$ or less in a temperature range of 23 to 100°C at a frequency of 200 kHz and an exciting magnetic flux density of 200 mT.

[2] Production method of sintered MnZn ferrite

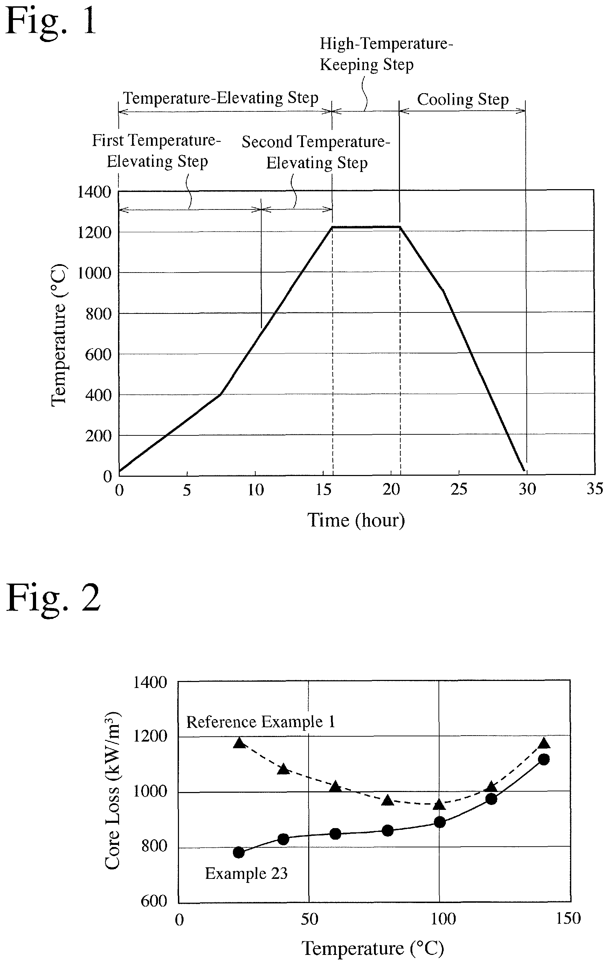

Fig. 1 shows the temperature conditions in a typical sintering step for producing the sintered MnZn ferrite of the present invention. The sintering step comprises a temperature-elevating step, a high-temperature-keeping step, and a cooling step. By adjusting the partial pressure of oxygen in the sintering step, Ca, Zr, etc. are segregated in grain boundaries, and the amounts of them dissolved in crystal grains are appropriately controlled, resulting in reduced core loss.

(A) Temperature-elevating step

The temperature-elevating step preferably has a first temperature-elevating step from room temperature to a temperature of 400 to 950°C, and a second temperature-elevating step after the first temperature-elevating step to the high-temperature-keeping step. The first temperature-elevating step is conducted in the air to remove the binder from the green body. In the second temperature-elevating step, it is preferable to reduce an oxygen concentration in an atmosphere to 1% by volume or less. In the temperature-elevating step, the temperature-elevating speed is appropriately selected according to the degree of carbon residue in the binder removal, the composition, etc. The temperature-elevating step may have a step of keeping a constant temperature between the first temperature-elevating step and the second temperature-elevating step. The average temperature-elevating speed is preferably in the range of 50 to 200°C/hour.

(B) High-temperature-keeping step

The high-temperature-keeping step is preferably conducted at a temperature of 1255 to 1315°C with controlling an oxygen concentration in an atmosphere to 0.1 to 3% by volume. The oxygen concentration in an atmosphere in the high-temperature-keeping step is preferably set higher than the oxygen concentration in the second temperature-elevating step.

(C) Cooling step

When the oxygen concentration is too high in the cooling step, oxidation of the sintered body proceeds to precipitate hematite from spinel ferrite. On the other hand, when the oxygen concentration is too low, wustite precipitates, resulting in crystal distortion, thereby core loss increases. It is preferable to control the oxygen concentration in the cooling step so that hematite and wustite do not precipitate. Specifically, it is preferable to control the oxygen concentration in the cooling step so that the oxygen concentration $P_{O2}$ (volume fraction) and the temperature T (°C) meet the following formula (1):

$$\log P_{O2} = a - b/(T + 273) \dots (1)$$

,wherein a is a constant of 3.1 to 12.8 and b is a constant of 6000 to 20000. a is defined from the temperature and the oxygen concentration in the high-temperature-keeping step. When b is less than 6000, the oxygen concentration cannot be sufficiently reduced even if the temperature drops, accelerating oxidation, so that hematite precipitates from spinel ferrite. On the other hand, when b is larger than 20000, the oxygen concentration decreases to precipitate wustite, and both the crystal grain and the grain boundary layer are not sufficiently oxidized, and the resistance is reduced, a is more preferably 6.4 to 11.5, and b is more preferably 10000 to 18000.

The sintered MnZn ferrite obtained by the above mentioned sintering step has a volume resistivity of 5 $\Omega\cdot$m or more at room temperature. Further, the volume resistivity is preferably 10 $\Omega\cdot$m or more so as to reduce the eddy current loss Pe.

The present invention will be explained in further detail by Examples below, without intention of restriction.

Examples 1 to 23 and Comparative Examples 1 to 13

$Fe_2O_3$ powder, ZnO powder, and $Mn_3O_4$ powder as the main components were wet-mixed in the proportions shown in Table 1, then dried, and calcined for 1.5 hours at 920°C. It is noted that the added amount of $Mn_3O_4$ powder in Table 1 is expressed as the amount calculated as MnO. $SiO_2$ powder, $CaCO_3$ powder, $Co_3O_4$ powder, $ZrO_2$ powder, $Nb_2O_5$ powder, and $Ta_2O_5$ powder in the proportions shown in Table 1 were added to 100 parts by mass of each obtained calcined powder in a ball mill, pulverized and mixed so that the average particle diameter was 1.2 $\mu$m. With polyvinyl alcohol added as a binder, the each obtained mixture was granulated in a mortar, and compression-molded to a ring-shaped green body.

Each green body was sintered by a sintering step comprising a temperature-elevating step rising a temperature from room temperature to a keeping temperature shown in Table 2, a high-temperature-keeping step of keeping the keeping temperature of 1285°C for 5 hours, and a cooling step of cooling from the keeping temperature to room temperature. In the temperature-elevating step, a temperature-elevating speed was 50°C/hour to 400°C, and 100°C/hour from 400°C to the keeping temperature (1285°C), and the oxygen concentration in a sintering atmosphere was 21% by volume from room temperature to 800°C (air is used), and 0.1% by volume after reaching 800°C. The oxygen concentration in the high-temperature-keeping step is in a range of 0.5 to 0.65% by volume shown in Table 2. The cooling step was conducted at a cooling speed of 100°C/hour from the keeping temperature to 900°C, and of 150°C/hour after 900°C. In the cooling step, the oxygen concentration (% by volume) was adjusted to the equilibrium oxygen partial pressure to 900°C. After 900°C, the cooling step was conducted in a stream of $N_2$ to reduce the final oxygen concentration to about 0.003% by volume. Thus, an annular sintered MnZn ferrite (a magnetic core) having an outer diameter of 30 mm, an inner diameter of 20 mm and a thickness of 10 mm was obtained.

The density, average crystal grain size, volume resistivity $\rho$, initial permeability $\mu$i, relative loss factor $\tan\delta/\mu$i, and core loss Pcv of each sintered MnZn ferrite were measured by the following method.

(1) Density of sintered body

The density was calculated by the method of measuring volume and mass from the dimensions and weight of each sintered MnZn ferrite. The results are shown in Table 3.

(2) Average crystal grain size

The grain boundaries on the mirror polished surface of each sintered MnZn ferrite were thermally etched (at 1100°C and for 1 hr in $N_2$), and then taken a micrograph by a scanning electron microscope (1000 times). The average crystal grain size was calculated as an equivalent circle diameter by quadrature method in a square region of 75$\mu$m × 75$\mu$m in the photograph. The results are shown in Table 3.

(3) Volume resistivity $\rho$

A plate-like sample was cut out from each sintered MnZn ferrite, silver paste electrodes were provided on the two opposing surfaces of the plate-like sample, and the electrical resistance R ($\Omega$) was measured using a milliohm high tester 3224 manufactured by HIOKI E.E. CORPORATION. The volume resistivity $\rho$ ($\Omega$·m) was calculated from the area A ($m^2$) of the surface on which the electrode formed and the thickness t (m) by the following formula (2). The results are shown in Table 3.

$$\rho \ (\Omega\cdot m) = R \times (A/t) \ \dots \ (2)$$

(4) Initial permeability $\mu$i

Each sintered MnZn ferrite was used as a magnetic core. The initial permeability $\mu$i of the magnetic core having 3-turn winding was measured at 23°C and 100 kHz in a magnetic field of 0.4 A/m by HP-4285A available from Hewlett-Packard. The results are shown in Table 3.

(5) Relative loss factor $\tan\delta/\mu$i

Each sintered MnZn ferrite was used as a magnetic core. The loss coefficient $\tan\delta$ and the initial permeability $\mu$i of the magnetic core having 3-turn winding were measured at 23°C and 100 kHz in a magnetic field of 0.4 A/m by HP-4285A available from Hewlett-Packard, to obtain $\tan\delta/\mu$i. The results are shown in Table 3.

(6) Core loss Pcv

Each sintered MnZn ferrite was used as a magnetic core. Using a B-H analyzer (SY-8218 available from Iwatsu Electric Co., Ltd.), the core loss Pcv of the magnetic core having a four-turn primary winding and a four-turn secondary winding was measured at -30°C, -15°C, 0°C, 23°C, 40°C, 60°C, 80°C, 100°C, 120°C and 140°C at a frequency of 200 kHz and an exciting magnetic flux density of 200 mT. The results are shown in Table 4.

Table 1-1

| Sample No. | Composition | | | | | | | |
|---|---|---|---|---|---|---|---|---|
| | Main Components (mol %) | | | Sub-Components (parts by mass) | | | | |
| | MnO | Fe$_2$O$_3$ | ZnO | CaCO$_3$ | SiO$_2$ | Co$_3$O$_4$ | ZrO2 | Nb$_2$O$_5$ |
| Example 1 | 39.38 | 53.67 | 6.95 | 0.09 | 0.006 | 0.45 | 0.06 | - |
| Example 2 | 39.37 | 53.67 | 6.96 | 0.18 | 0.006 | 0.45 | 0.06 | - |
| Example 3 | 39.37 | 53.69 | 6.94 | 0.045 | 0.009 | 0.45 | 0.06 | - |
| Example 4 | 39.38 | 53.66 | 6.96 | 0.09 | 0.009 | 0.45 | 0.06 | - |
| Example 5 | 39.38 | 53.66 | 6.96 | 0.18 | 0.009 | 0.45 | 0.06 | - |
| Example 6 | 39.37 | 53.69 | 6.94 | 0.045 | 0.012 | 0.45 | 0.06 | - |
| Example 7 | 39.37 | 53.69 | 6.94 | 0.09 | 0.012 | 0.45 | 0.06 | - |
| Example 8 | 39.37 | 53.69 | 6.94 | 0.18 | 0.012 | 0.45 | 0.06 | - |
| Example 9 | 39.37 | 53.69 | 6.94 | 0.045 | 0.015 | 0.45 | 0.06 | - |
| Example 10 | 39.37 | 53.69 | 6.94 | 0.09 | 0.015 | 0.45 | 0.06 | - |
| Example 11 | 39.37 | 53.69 | 6.94 | 0.18 | 0.015 | 0.45 | 0.06 | - |
| Example 12 | 39.34 | 53.68 | 6.98 | 0.09 | 0.006 | 0.45 | 0.06 | - |
| Example 13 | 41.40 | 54.13 | 4.47 | 0.09 | 0.003 | 0.45 | 0.06 | - |
| Example 14 | 41.43 | 54.10 | 4.47 | 0.18 | 0.003 | 0.45 | 0.06 | - |
| Example 15 | 41.42 | 54.12 | 4.46 | 0.09 | 0.006 | 0.45 | 0.06 | - |
| Example 16 | 41.41 | 54.13 | 4.46 | 0.18 | 0.006 | 0.45 | 0.06 | - |
| Example 17 | 41.39 | 54.15 | 4.46 | 0.09 | 0.009 | 0.45 | 0.06 | - |
| Example 18 | 41.43 | 54.10 | 4.47 | 0.18 | 0.009 | 0.45 | 0.06 | - |

Table 1-2

| Sample No. | Composition | | | | | | | |
|---|---|---|---|---|---|---|---|---|
| | Main Components (mol %) | | | Sub-Components (parts by mass) | | | | |
| | MnO | Fe$_2$O$_3$ | ZnO | CaCO$_3$ | SiO$_2$ | Co$_3$O$_4$ | ZrO$_2$ | Nb$_2$O$_5$ |
| Comp. Ex. 1 | 39.30 | 53.73 | 6.97 | 0.09 | 0.006 | 0.35 | 0.06 | - |
| Comp. Ex. 2 | 41.43 | 54.06 | 4.51 | 0.18 | 0.006 | 0.35 | 0.03 | - |
| Comp. Ex. 3 | 41.41 | 54.11 | 4.48 | 0.18 | 0.006 | 0.375 | 0.03 | - |
| Comp. Ex. 4 | 39.34 | 53.71 | 6.95 | 0.27 | 0.003 | 0.45 | 0.06 | - |
| Comp. Ex. 5 | 39.38 | 53.65 | 6.97 | 0.27 | 0.006 | 0.45 | 0.06 | - |
| Comp. Ex. 6 | 41.40 | 54.12 | 4.48 | 0.27 | 0.003 | 0.45 | 0.06 | - |
| Comp. Ex. 7 | 41.43 | 54.09 | 4.48 | 0.27 | 0.006 | 0.45 | 0.06 | - |
| Example 19 | 39.38 | 53.65 | 6.97 | 0.18 | 0.003 | 0.45 | 0.06 | 0.006 |
| Example 20 | 39.37 | 53.67 | 6.96 | 0.18 | 0.006 | 0.45 | 0.06 | 0.006 |
| Example 21 | 39.35 | 53.69 | 6.96 | 0.18 | 0.012 | 0.45 | 0.06 | 0.006 |
| Example 22 | 39.37 | 53.68 | 6.95 | 0.18 | 0.015 | 0.45 | 0.06 | 0.006 |
| Example 23 | 39.35 | 53.70 | 6.95 | 0.18 | 0.015 | 0.45 | 0.06 | 0.012 |

(continued)

| Sample No. | Composition | | | | | | | |
|---|---|---|---|---|---|---|---|---|
| | Main Components (mol %) | | | Sub-Components (parts by mass) | | | | |
| | MnO | $Fe_2O_3$ | ZnO | $CaCO_3$ | $SiO_2$ | $Co_3O_4$ | $ZrO_2$ | $Nb_2O_5$ |
| Comp. Ex. 8 | 39.36 | 53.67 | 6.97 | 0.18 | 0.003 | 0.45 | 0.06 | 0.018 |
| Comp. Ex. 9 | 39.39 | 53.65 | 6.96 | 0.18 | 0.006 | 0.45 | 0.06 | 0.018 |
| Comp. Ex. 10 | 39.38 | 53.67 | 6.95 | 0.18 | 0.009 | 0.45 | 0.06 | 0.018 |
| Comp. Ex. 11 | 39.37 | 53.67 | 6.96 | 0.18 | 0.012 | 0.45 | 0.06 | 0.018 |
| Comp. Ex. 12 | 39.37 | 53.67 | 6.96 | 0.18 | 0.015 | 0.45 | 0.06 | 0.018 |
| Comp. Ex. 13 | 39.38 | 53.65 | 6.97 | 0.18 | 0.018 | 0.45 | 0.06 | 0.018 |

Table 1-3

| Sample No. | Other Sub-Components (parts by mass) | Composition Parameter |
|---|---|---|
| | $Ta_2O_5$ | $C_{(Zn)}/C_{(Co)}$ |
| Example 1 | - | 15.4 |
| Example 2 | - | 15.5 |
| Example 3 | - | 15.4 |
| Example 4 | - | 15.5 |
| Example 5 | - | 15.5 |
| Example 6 | - | 15.4 |
| Example 7 | - | 15.4 |
| Example 8 | - | 15.4 |
| Example 9 | - | 15.4 |
| Example 10 | - | 15.4 |
| Example 11 | - | 15.4 |
| Example 12 | 0.02 | 15.5 |
| Example 13 | - | 9.9 |
| Example 14 | - | 9.9 |
| Example 15 | - | 9.9 |
| Example 16 | - | 9.9 |
| Example 17 | - | 9.9 |
| Example 18 | - | 9.9 |

Table 1-4

| Sample No. | Other Sub-Components (parts by mass) | Composition Parameter |
|---|---|---|
| | $Ta_2O_5$ | $C_{(Zn)}/C_{(Co)}$ |
| Comp. Ex. 1 | 0.02 | 19.9 |
| Comp. Ex. 2 | 0.02 | 12.9 |
| Comp. Ex. 3 | 0.02 | 12.0 |

(continued)

| Sample No. | Other Sub-Components (parts by mass) | Composition Parameter |
|---|---|---|
| | $Ta_2O_5$ | $C_{(Zn)}/C_{(Co)}$ |
| Comp. Ex. 4 | - | 15.4 |
| Comp. Ex. 5 | - | 15.5 |
| Comp. Ex. 6 | - | 9.9 |
| Comp. Ex. 7 | - | 9.9 |
| Example 19 | - | 15.5 |
| Example 20 | - | 15.5 |
| Example 21 | - | 15.5 |
| Example 22 | - | 15.5 |
| Example 23 | - | 15.5 |
| Comp. Ex. 8 | - | 15.5 |
| Comp. Ex. 9 | - | 15.5 |
| Comp. Ex. 10 | - | 15.4 |
| Comp. Ex. 11 | - | 15.5 |
| Comp. Ex. 12 | - | 15.5 |
| Comp. Ex. 13 | - | 15.5 |

Table 2-1

| Sample No. | Production Conditions | | |
|---|---|---|---|
| | Pulverized Particle Size ($\mu$m) | High-Temperature-Keeping Step | |
| | | Keeping Temperature (°C) | Oxygen Concentration (%)[1] |
| Example 1 | 1.2 | 1285 | 0.5 |
| Example 2 | 1.2 | 1285 | 0.5 |
| Example 3 | 1.2 | 1285 | 0.5 |
| Example 4 | 1.2 | 1285 | 0.5 |
| Example 5 | 1.2 | 1285 | 0.5 |
| Example 6 | 1.2 | 1285 | 0.5 |
| Example 7 | 1.2 | 1285 | 0.5 |
| Example 8 | 1.2 | 1285 | 0.5 |
| Example 9 | 1.2 | 1285 | 0.5 |
| Example 10 | 1.2 | 1285 | 0.5 |
| Example 11 | 1.2 | 1285 | 0.5 |
| Example 12 | 1.2 | 1285 | 0.5 |
| Example 13 | 1.2 | 1285 | 0.65 |
| Example 14 | 1.2 | 1285 | 0.65 |
| Example 15 | 1.2 | 1285 | 0.65 |
| Example 16 | 1.2 | 1285 | 0.65 |

(continued)

| Sample No. | Production Conditions | | |
|---|---|---|---|
| | Pulverized Particle Size (μm) | High-Temperature-Keeping Step | |
| | | Keeping Temperature (°C) | Oxygen Concentration (%)[1] |
| Example 17 | 1.2 | 1285 | 0.65 |
| Example 18 | 1.2 | 1285 | 0.65 |
| Note (1): Oxygen concentration (% by volume) in the atmosphere in the high-temperature-keeping step. | | | |

Table 2-2

| Sample No. | Production Conditions | | |
|---|---|---|---|
| | Pulverized Particle Size (μm) | High-Temperature-Keeping Step | |
| | | Keeping Temperature (°C) | Oxygen Concentration (%)[1] |
| Comp. Ex. 1 | 1.2 | 1285 | 0.5 |
| Comp. Ex. 2 | 1.2 | 1285 | 0.65 |
| Comp. Ex. 3 | 1.2 | 1285 | 0.65 |
| Comp. Ex. 4 | 1.2 | 1285 | 0.5 |
| Comp. Ex. 5 | 1.2 | 1285 | 0.5 |
| Comp. Ex. 6 | 1.2 | 1285 | 0.65 |
| Comp. Ex. 7 | 1.2 | 1285 | 0.65 |
| Example 19 | 1.2 | 1285 | 0.5 |
| Example 20 | 1.2 | 1285 | 0.5 |
| Example 21 | 1.2 | 1285 | 0.5 |
| Example 22 | 1.2 | 1285 | 0.5 |
| Example 23 | 1.2 | 1285 | 0.5 |
| Comp. Ex. 8 | 1.2 | 1285 | 0.5 |
| Comp. Ex. 9 | 1.2 | 1285 | 0.5 |
| Comp. Ex. 10 | 1.2 | 1285 | 0.5 |
| Comp. Ex. 11 | 1.2 | 1285 | 0.5 |
| Comp. Ex. 12 | 1.2 | 1285 | 0.5 |
| Comp. Ex. 13 | 1.2 | 1285 | 0.5 |
| Note (1): Oxygen concentration (% by volume) in the atmosphere in the high-temperature-keeping step. | | | |

Table 3-1

| Sample No. | Properties | | | | |
|---|---|---|---|---|---|
| | D[1] (g/cm³) | Dav[2] (μm) | ρ[3] (Ω·m) | μi[4] | tanδ/μi[5] (×10⁻⁶) |
| Example 1 | 4.89 | 8.7 | 4.5 | 3846 | 3.4 |
| Example 2 | 4.89 | 8.3 | 8.2 | 3656 | 3.6 |
| Example 3 | 4.93 | 10.6 | 3.8 | 3632 | 3.6 |
| Example 4 | 4.90 | 8.6 | 8.6 | 3690 | 3.4 |

(continued)

| Sample No. | Properties | | | | |
|---|---|---|---|---|---|
| | D[1] (g/cm$^3$) | Dav[2] (µm) | ρ[3] (Ω·m) | µi[4] | tanδ/µi[5] (×10$^{-6}$) |
| Example 5 | 4.89 | 8.0 | 11.5 | 3441 | 3.7 |
| Example 6 | 4.92 | 10.8 | 5.5 | 3547 | 3.7 |
| Example 7 | 4.91 | 10.5 | 14.0 | 3409 | 3.3 |
| Example 8 | 4.90 | 9.8 | 12.8 | 3419 | 3.6 |
| Example 9 | 4.91 | 10.8 | 7.1 | 3403 | 3.7 |
| Example 10 | 4.91 | 10.6 | 16.5 | 3318 | 3.3 |
| Example 11 | 4.90 | 9.4 | 24.1 | 3195 | 3.6 |
| Example 12 | 4.94 | 9.1 | 12.6 | 3504 | 3.2 |
| Example 13 | 4.87 | 9.1 | 3.2 | 3595 | 3.5 |
| Example 14 | 4.86 | 8.3 | 8.1 | 3348 | 3.4 |
| Example 15 | 4.88 | 8.7 | 7.5 | 3354 | 3.4 |
| Example 16 | 4.87 | 8.0 | 11.7 | 3257 | 3.5 |
| Example 17 | 4.88 | 8.6 | 9.5 | 3359 | 3.3 |
| Example 18 | 4.88 | 8.4 | 12.0 | 3096 | 3.6 |
| Note (1): Density of sintered body, Note (2): Average crystal grain size, Note (3): Volume resistivity, Note (4): Initial permeability at 100 kHz and 0.4 A/m, and Note (5): Relative loss factor at 100 kHz and 0.4 A/m. | | | | | |

Table 3-2

| Sample No. | Properties | | | | |
|---|---|---|---|---|---|
| | D[1] (g/cm$^3$) | Dav[2] (µm) | ρ[3] (Ω·m) | µi[4] | tanδ/µi[5] (×10$^{-6}$) |
| Comp. Ex. 1 | 4.96 | 10.4 | 12.3 | 3041 | 5.3 |
| Comp. Ex. 2 | 4.86 | 8.3 | 10.0 | 2733 | 6.1 |
| Comp. Ex. 3 | 4.87 | 9.2 | 12.9 | 2820 | 5.3 |
| Comp. Ex. 4 | 4.89 | 7.6 | 4.1 | 3666 | 4.3 |
| Comp. Ex. 5 | 4.88 | 8.1 | 7.0 | 3438 | 4.5 |
| Comp. Ex. 6 | 4.87 | 8.0 | 1.7 | 3231 | 4.2 |
| Comp. Ex. 7 | 4.87 | 9.5 | 1.8 | 3023 | 4.9 |
| Example 19 | 4.89 | 8.9 | 7.4 | 3840 | 3.2 |
| Example 20 | 4.89 | 8.7 | 16.5 | 3455 | 3.1 |
| Example 21 | 4.89 | 9.8 | 23.0 | 3293 | 3.5 |
| Example 22 | 4.90 | 9.2 | 27.4 | 3109 | 3.4 |
| Example 23 | 4.90 | 9.2 | 28.9 | 3086 | 3.5 |
| Comp. Ex. 8 | 4.89 | 9.6 | 4.1 | 2744 | 3.0 |
| Comp. Ex. 9 | 4.89 | 9.6 | 10.8 | 2768 | 3.0 |
| Comp. Ex. 10 | 4.90 | 9.6 | 17.4 | 2967 | 3.0 |

(continued)

| Sample No. | Properties | | | | |
|---|---|---|---|---|---|
| | $D^{(1)}$ (g/cm$^3$) | $D_{av}^{(2)}$ ($\mu$m) | $\rho^{(3)}$ ($\Omega \cdot$m) | $\mu i^{(4)}$ | $\tan\delta/\mu i^{(5)}$ ($\times 10^{-6}$) |
| Comp. Ex. 11 | 4.90 | 10.0 | 19.1 | 3006 | 3.0 |
| Comp. Ex. 12 | 4.90 | 10.1 | 14.3 | 2822 | 6.1 |
| Comp. Ex. 13 | 4.86 | 324 | 0.4 | 2781 | 31 |

Note (1): Density of sintered body,
Note (2): Average crystal grain size,
Note (3): Volume resistivity,
Note (4): Initial permeability at 100 kHz and 0.4 A/m, and
Note (5): Relative loss factor at 100 kHz and 0.4 A/m.

Table 4-1

| Sample No. | Core Loss Pcv (kW/m$^3$) at 200 kHz and 200 mT | | | |
|---|---|---|---|---|
| | 0°C | 23°C | 40°C | 60°C |
| Example 1 | 1175 | 790 | 832 | 858 |
| Example 2 | 1081 | 854 | 912 | 938 |
| Example 3 | 1277 | 855 | 897 | 924 |
| Example 4 | 1122 | 825 | 869 | 887 |
| Example 5 | 1004 | 862 | 908 | 928 |
| Example 6 | 1240 | 876 | 915 | 936 |
| Example 7 | 1130 | 825 | 866 | 888 |
| Example 8 | 1048 | 834 | 883 | 903 |
| Example 9 | 1185 | 875 | 924 | 947 |
| Example 10 | 1123 | 862 | 903 | 916 |
| Example 11 | 999 | 902 | 945 | 959 |
| Example 12 | 1052 | 798 | 839 | 854 |
| Example 13 | 1377 | 859 | 890 | 903 |
| Example 14 | 1218 | 900 | 958 | 966 |
| Example 15 | 1176 | 872 | 913 | 909 |
| Example 16 | 1055 | 884 | 925 | 926 |
| Example 17 | 1299 | 849 | 896 | 895 |
| Example 18 | 1035 | 903 | 946 | 942 |

Table 4-2

| Sample No. | Core Loss Pcv (kW/m$^3$) at 200 kHz and 200 mT | | | |
|---|---|---|---|---|
| | 0°C | 23°C | 40°C | 60°C |
| Comp. Ex. 1 | 1168 | 1112 | 1043 | 961 |
| Comp. Ex. 2 | 1422 | 1322 | 1229 | 1104 |
| Comp. Ex. 3 | 1234 | 1203 | 1138 | 1037 |

(continued)

| Sample No. | Core Loss Pcv (kW/m$^3$) at 200 kHz and 200 mT | | | |
|---|---|---|---|---|
| | 0°C | 23°C | 40°C | 60°C |
| Comp. Ex. 4 | 923 | 929 | 969 | 986 |
| Comp. Ex. 5 | 925 | 958 | 1001 | 1010 |
| Comp. Ex. 6 | 1001 | 959 | 1008 | 1017 |
| Comp. Ex. 7 | 937 | 1039 | 1075 | 1072 |
| Example 19 | 1182 | 781 | 821 | 852 |
| Example 20 | 999 | 782 | 831 | 851 |
| Example 21 | 984 | 833 | 865 | 880 |
| Example 22 | 1011 | 846 | 895 | 911 |
| Example 23 | 1027 | 879 | 921 | 925 |
| Comp. Ex. 8 | 1569 | 1301 | 1328 | 1366 |
| Comp. Ex. 9 | 1443 | 1223 | 1252 | 1278 |
| Comp. Ex. 10 | 1265 | 980 | 1014 | 1039 |
| Comp. Ex. 11 | 1207 | 948 | 979 | 993 |
| Comp. Ex. 12 | 1445 | 1424 | 1443 | 1402 |
| Comp. Ex. 13 | 4701 | 3452 | 3549 | 3520 |

Table 4-3

| Sample No. | Core Loss Pcv (kW/m$^3$) at 200 kHz and 200 mT | | | | Maximum Core Loss Pcv$_{max}$ (kW/m$^3$) at 23 to 100°C |
|---|---|---|---|---|---|
| | 80°C | 100°C | 120°C | 140°C | |
| Example 1 | 884 | 936 | 1062 | 1,250 | 936 |
| Example 2 | 944 | 976 | 1068 | 1,237 | 976 |
| Example 3 | 947 | 999 | 1133 | 1,340 | 999 |
| Example 4 | 894 | 926 | 1034 | 1,207 | 926 |
| Example 5 | 937 | 950 | 1030 | 1,186 | 950 |
| Example 6 | 941 | 985 | 1104 | 1,299 | 985 |
| Example 7 | 898 | 929 | 1023 | 1,184 | 929 |
| Example 8 | 901 | 929 | 1010 | 1,164 | 929 |
| Example 9 | 951 | 975 | 1070 | 1,317 | 975 |
| Example 10 | 918 | 938 | 1034 | 1,187 | 938 |
| Example 11 | 953 | 960 | 1027 | 1,169 | 960 |
| Example 12 | 857 | 886 | 991 | 1168 | 886 |
| Example 13 | 909 | 973 | 1164 | 1435 | 973 |
| Example 14 | 956 | 971 | 1080 | 1295 | 971 |
| Example 15 | 895 | 916 | 1043 | 1274 | 916 |
| Example 16 | 904 | 915 | 1019 | 1235 | 926 |
| Example 17 | 882 | 901 | 1022 | 1237 | 901 |

(continued)

| Sample No. | Core Loss Pcv (kW/m³) at 200 kHz and 200 mT | | | | Maximum Core Loss Pcv$_{max}$ (kW/m³) at 23 to 100°C |
|---|---|---|---|---|---|
| | 80°C | 100°C | 120°C | 140°C | |
| Example 18 | 921 | 926 | 1007 | 1205 | 946 |

Table 4-4

| Sample No. | Core Loss Pcv (kW/m³) at 200 kHz and 200 mT | | | | Maximum Core Loss Pcv$_{max}$ (kW/m³) at 23 to 100°C |
|---|---|---|---|---|---|
| | 80°C | 100°C | 120°C | 140°C | |
| Comp. Ex. 1 | 880 | 887 | 1056 | 1304 | 1112 |
| Comp. Ex. 2 | 993 | 933 | 1053 | 1372 | 1322 |
| Comp. Ex. 3 | 955 | 924 | 1063 | 1344 | 1203 |
| Comp. Ex. 4 | 993 | 1022 | 1100 | 1,269 | 1,022 |
| Comp. Ex. 5 | 1014 | 1033 | 1089 | 1,230 | 1,033 |
| Comp. Ex. 6 | 1008 | 1019 | 1118 | 1337 | 1019 |
| Comp. Ex. 7 | 1050 | 1053 | 1133 | 1333 | 1075 |
| Example 19 | 869 | 914 | 1016 | 1177 | 914 |
| Example 20 | 861 | 892 | 977 | 1119 | 892 |
| Example 21 | 883 | 913 | 1001 | 1158 | 913 |
| Example 21 | 918 | 939 | 1019 | 1162 | 939 |
| Example 23 | 925 | 936 | 1008 | 1142 | 936 |
| Comp. Ex. 8 | 1430 | 1536 | 1678 | 1842 | 1536 |
| Comp. Ex. 9 | 1325 | 1402 | 1519 | 1662 | 1402 |
| Comp. Ex. 10 | 1071 | 1126 | 1232 | 1375 | 1126 |
| Comp. Ex. 11 | 1013 | 1055 | 1145 | 1295 | 1055 |
| Comp. Ex. 12 | 1330 | 1270 | 1292 | 1428 | 1443 |
| Comp. Ex. 13 | 3504 | 3646 | 4002 | 4392 | 3646 |

As is clear from Tables 3 and 4, all of the sintered MnZn ferrites of Examples 1 to 23 had the maximum core loss Pcv$_{max}$ of 1000 kW/m³ or less in a temperature range of 23 to 100°C at a frequency of 200 kHz and an exciting magnetic flux density of 200 mT, and low core loss in a wide temperature range. On the other hand, the sintered MnZn ferrites of Comparative Examples 1 to 13 had the maximum core loss Pcv$_{max}$ of more than 1000 kW/m³ in a temperature range of 23 to 100°C at a frequency of 200 kHz and an exciting magnetic flux density of 200 mT. Fig. 2 shows the temperature dependency of the core losses of an example of the sintered MnZn ferrite of the present invention (Example 23) and the sintered MnZn ferrite described in WO 2017/164350 (Reference Example 1). From the above results, it can be found that according to the present invention, a sintered MnZn ferrite with low core loss from low temperature (23°C) to high temperature (100°C), particularly even at as low temperatures as 60°C or lower, can be obtained.

Examples 24 to 31 and Comparative Examples 14 to 17

The sintered MnZn ferrites were produced in the same manner as in Example 1 except that the composition shown in Table 5 and the production conditions shown in Table 6 were used. The density, average crystal grain size, volume resistivity $\rho$, initial permeability $\mu$i, relative loss factor tan$\delta$/$\mu$i, and core loss Pcv were measured in the same manner as in Example 1 for each sintered MnZn ferrite. The results are shown in Tables 7 and 8.

Table 5-1

| Sample No. | Composition | | | | | | | |
|---|---|---|---|---|---|---|---|---|
| | Main Components (mol %) | | | Sub-Components (parts by mass) | | | | |
| | MnO | $Fe_2O_3$ | ZnO | $CaCO_3$ | $SiO_2$ | $Co_3O_4$ | $ZrO_2$ | $Nb_2O_5$ |
| Example 24 | 39.34 | 53.70 | 6.96 | 0.18 | 0.012 | 0.45 | 0.06 | 0.012 |
| Example 25 | 39.34 | 53.70 | 6.96 | 0.18 | 0.003 | 0.45 | 0.06 | 0.012 |
| Example 26 | 39.38 | 53.66 | 6.96 | 0.18 | 0.009 | 0.45 | 0.06 | 0.006 |
| Example 27 | 39.38 | 53.66 | 6.96 | 0.18 | 0.009 | 0.45 | 0.06 | 0.006 |
| Example 28 | 39.38 | 53.66 | 6.96 | 0.18 | 0.009 | 0.45 | 0.06 | 0.006 |
| Example 29 | 39.38 | 53.66 | 6.96 | 0.18 | 0.009 | 0.45 | 0.06 | 0.012 |
| Example 30 | 39.38 | 53.66 | 6.96 | 0.18 | 0.009 | 0.45 | 0.06 | 0.012 |
| Example 31 | 39.38 | 53.66 | 6.96 | 0.18 | 0.009 | 0.45 | 0.06 | 0.012 |
| Comp. Ex. 14 | 39.37 | 53.67 | 6.96 | 0.18 | 0.006 | 0.45 | 0.06 | 0.018 |
| Comp. Ex. 15 | 41.41 | 54.12 | 4.47 | 0.27 | 0.009 | 0.45 | 0.06 | - |
| Comp. Ex. 16 | 41.41 | 54.12 | 4.47 | 0.27 | 0.009 | 0.45 | 0.06 | - |
| Comp. Ex. 17 | 41.41 | 54.12 | 4.47 | 0.27 | 0.009 | 0.45 | 0.06 | - |

Table 5-2

| Sample No. | Other Sub-Components (parts by mass) | Composition Parameter |
|---|---|---|
| | $Ta_2O_5$ | $C_{(Zn)}/C_{(Co)}$ |
| Example 24 | - | 15.5 |
| Example 25 | - | 15.5 |
| Example 26 | - | 15.5 |
| Example 27 | - | 15.5 |
| Example 28 | - | 15.5 |
| Example 29 | - | 15.5 |
| Example 30 | - | 15.5 |
| Example 31 | - | 15.5 |
| Comp. Ex. 14 | - | 15.5 |
| Comp. Ex. 15 | - | 9.9 |
| Comp. Ex. 16 | - | 9.9 |
| Comp. Ex. 17 | - | 9.9 |

Table 6

| Sample No. | Production Conditions | | |
|---|---|---|---|
| | Pulverized Particle Size ($\mu$m) | High-Temperature-Keeping Step | |
| | | Keeping Temperature (°C) | Oxygen Concentration (%)[1] |
| Example 24 | 1.2 | 1285 | 0.5 |
| Example 25 | 1.2 | 1255 | 0.3 |

(continued)

| Sample No. | Production Conditions | | |
|---|---|---|---|
| | Pulverized Particle Size (μm) | High-Temperature-Keeping Step | |
| | | Keeping Temperature (°C) | Oxygen Concentration (%)[1] |
| Example 26 | 1.2 | 1315 | 0.72 |
| Example 27 | 1.2 | 1285 | 0.5 |
| Example 28 | 1.2 | 1255 | 0.3 |
| Example 29 | 1.2 | 1315 | 0.72 |
| Example 30 | 1.2 | 1285 | 0.5 |
| Example 31 | 1.2 | 1255 | 0.3 |
| Comp. Ex. 14 | 1.2 | 1255 | 0.3 |
| Comp. Ex. 15 | 1.2 | 1315 | 1 |
| Comp. Ex. 16 | 1.2 | 1285 | 0.65 |
| Comp. Ex. 17 | 1.2 | 1255 | 0.4 |
| Note (1): Oxygen concentration (% by volume) in the atmosphere in the high-temperature-keeping step. | | | |

Table 7

| Sample No. | Properties | | | | |
|---|---|---|---|---|---|
| | $D^{(1)}$ (g/cm³) | $D_{av}^{(2)}$ (μm) | $\rho^{(3)}$ (Ω·m) | $\mu_i^{(4)}$ | $\tan\delta/\mu_i^{(5)}$ (×10⁻⁶) |
| Example 24 | 4.89 | 8.5 | 26.3 | 3101 | 3.3 |
| Example 25 | 4.87 | 7.8 | 29.6 | 2859 | 2.9 |
| Example 26 | 4.92 | 10.7 | 17.8 | 3571 | 4.2 |
| Example 27 | 4.89 | 9.4 | 19.8 | 3459 | 3.4 |
| Example 28 | 4.85 | 7.6 | 21.0 | 3234 | 3.3 |
| Example 29 | 4.93 | 10.8 | 16.0 | 3413 | 4.1 |
| Example 30 | 4.90 | 9.4 | 19.9 | 3270 | 3.2 |
| Example 31 | 4.86 | 8.1 | 22.2 | 3098 | 3.3 |
| Comp. Ex. 14 | 4.88 | 7.8 | 18.7 | 2650 | 4.3 |
| Comp. Ex. 15 | 4.87 | 384 | 0.3 | 2027 | 55 |
| Comp. Ex. 16 | 4.87 | 9.3 | 0.3 | 2261 | 31 |
| Comp. Ex. 17 | 4.86 | 6.2 | 3.5 | 2027 | 55 |
| Note (1): Density of sintered body, Note (2): Average crystal grain size, Note (3): Volume resistivity, Note (4): Initial permeability at 100 kHz and 0.4 A/m, and Note (5): Relative loss factor at 100 kHz and 0.4 A/m. | | | | | |

EP 4 245 738 A1

Table 8-1

| Sample No. | Core Loss Pcv (kW/m$^3$) at 200 kHz and 200 mT | | | |
| --- | --- | --- | --- | --- |
| | 0°C | 23°C | 40°C | 60°C |
| Example 24 | 1008 | 818 | 855 | 875 |
| Example 25 | 904 | 764 | 813 | 848 |
| Example 26 | 1160 | 892 | 935 | 940 |
| Example 27 | 1054 | 826 | 872 | 881 |
| Example 28 | 966 | 782 | 833 | 862 |
| Example 29 | 1168 | 931 | 964 | 962 |
| Example 30 | 1055 | 850 | 884 | 896 |
| Example 31 | 948 | 792 | 843 | 867 |
| Comp. Ex. 14 | 1120 | 1118 | 1147 | 1145 |
| Comp. Ex. 15 | 4709 | 4158 | 4165 | 4045 |
| Comp. Ex. 16 | 3737 | 3389 | 3390 | 3296 |
| Comp. Ex. 17 | 1280 | 1321 | 1365 | 1347 |

Table 8-2

| Sample No. | Core Loss Pcv (kW/m$^3$) at 200 kHz and 200 mT | | | | Maximum Core Loss Pcv$_{max}$ (kW/m$^3$) at 23 to 100°C |
| --- | --- | --- | --- | --- | --- |
| | 80°C | 100°C | 120°C | 140°C | |
| Example 24 | 887 | 920 | 1005 | 1152 | 920 |
| Example 25 | 880 | 930 | 1023 | 1182 | 930 |
| Example 26 | 926 | 931 | 998 | 1141 | 940 |
| Example 27 | 887 | 910 | 981 | 1122 | 910 |
| Example 28 | 882 | 922 | 1011 | 1169 | 922 |
| Example 29 | 952 | 966 | 1039 | 1178 | 966 |
| Example 30 | 901 | 933 | 1012 | 1148 | 933 |
| Example 31 | 886 | 925 | 1018 | 1161 | 925 |
| Comp. Ex. 14 | 1125 | 1127 | 1185 | 1330 | 1147 |
| Comp. Ex. 15 | 3868 | 3803 | 4279 | 4903 | 4165 |
| Comp. Ex. 16 | 3130 | 3035 | 3218 | 3624 | 3390 |
| Comp. Ex. 17 | 1309 | 1283 | 1361 | 1577 | 1365 |

As is clear from Tables 7 and 8, all of the sintered MnZn ferrites of Examples 24 to 31 had the initial permeability $\mu$i of 2700 or more. On the other hand, the sintered MnZn ferrites of Comparative Examples 14 to 17 had the initial permeability $\mu$i of less than 2700. From the above results, it can be found that according to the present invention, a sintered MnZn ferrite with high initial permeability $\mu$i can be obtained.

**Claims**

1.  A sintered MnZn ferrite comprising

    as main components 53.5 to 54.3% by mol of Fe calculated as Fe$_2$O$_3$, and 4.2 to 7.2% by mol of Zn calculated as ZnO, the balance being Mn calculated as MnO, and

comprising as sub-components 0.003 to 0.018 parts by mass of Si calculated as $SiO_2$, 0.03 to 0.21 parts by mass of Ca calculated as $CaCO_3$, 0.40 to 0.50 parts by mass of Co calculated as $Co_3O_4$, 0 to 0.09 parts by mass of Zr calculated as $ZrO_2$, and 0 to 0.015 parts by mass of Nb calculated as $Nb_2O_5$, per 100 parts by mass in total of the main components (calculated as the oxides),

C(Zn)/C(Co) being 9.3 to 16.0 wherein C(Zn) is the content of Zn contained as a main component (% by mol calculated as ZnO in the main components), and C(Co) is the content of Co contained as a sub-component (parts by mass calculated as $Co_3O_4$ per 100 parts by mass in total of the main components).

2.  The sintered MnZn ferrite according to claim 1, wherein the content of Si is 0.006 to 0.012 parts by mass calculated as $SiO_2$, the content of Ca is 0.045 to 0.18 parts by mass calculated as $CaCO_3$, the content of Zr is 0.03 to 0.06 parts by mass calculated as $ZrO_2$, and the content of Nb is 0.006 to 0.012 parts by mass calculated as $Nb_2O_5$.

3.  The sintered MnZn ferrite according to claim 1 or 2, having a density of 4.80 $g/cm^3$ or more.

4.  The sintered MnZn ferrite according to any one of claims 1 to 3, having an average crystal grain size of 6 $\mu$m or more and 11 $\mu$m or less.

5.  The sintered MnZn ferrite according to any one of claims 1 to 4, having maximum core loss $Pcv_{max}$ of 1000 $kW/m^3$ or less in a temperature range of 23 to 100°C at a frequency of 200 kHz and an exciting magnetic flux density of 200 mT.

6.  The sintered MnZn ferrite according to any one of claims 1 to 5, having initial permeability $\mu$i of 2700 or more.

7.  The sintered MnZn ferrite according to claim 1, comprising 0.02 to 0.09 parts by mass of Zr calculated as $ZrO_2$.

8.  The sintered MnZn ferrite according to claim 1, comprising 0.003 to 0.015 parts by mass of Nb calculated as $Nb_2O_5$.

9.  The sintered MnZn ferrite according to any one of claims 1 to 8, comprising up to 0.05 parts by mass of Ta calculated as $Ta_2O_5$.

10.  The sintered MnZn ferrite according to any one of claims 1 to 9, comprising one or more selected from the group consisting of 0.03 parts by mass or less of S, 0.01 parts by mass or less of Cl, 0.001 parts by mass or less of P, 0.0001 parts by mass or less of B, and 0.01 parts by mass or less of Bi calculated as $Bi_2O_5$.

11.  A method for producing the sintered MnZn ferrite according to any one of claims 1 to 10, comprising

a step of molding a raw material powder for MnZn ferrite to obtain a green body, and
a step of sintering the green body,
the sintering step comprising a step of keeping a high temperature of higher than 1255°C and 1315°C or lower in an atmosphere having an oxygen concentration of more than 0.1% by volume and 3% by volume or less for 1 to 6 hours.

12.  Use of the sintered MnZn ferrite according to any one of claims 1 to 10, or as manufactured according to claim 11, for providing a magnetic core of a transformer, inductor, reactor, or choke coil.

13.  Use of the transformer, inductor, reactor, or choke coil according to claim 12 employing the sintered MnZn ferrite according to any one of claims 1 to 10, or as manufactured according to claim 11, for manufacturing a power supply device.

14.  Use of the power supply device manufactured according to claim 13 for equipping a battery electric vehicle, BEV, a hybrid electric vehicle, HEV, or a plug-in hybrid electric vehicle, PHEV, therewith.

15.  A battery electric vehicle, BEV, a hybrid electric vehicle, HEV, or a plug-in hybrid electric vehicle, PHEV, including a power supply device comprising the sintered MnZn ferrite according to any one of claims 1 to 10, or as manufactured according to claim 11.

# Fig. 1

# Fig. 2

Europäisches
Patentamt

European
Patent Office

Office européen
des brevets

# EUROPEAN SEARCH REPORT

Application Number

EP 22 21 4516

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 594 193 A1 (HITACHI METALS LTD [JP]) 15 January 2020 (2020-01-15) * examples 49 and 50 in tables 1-3, 2-3, 3-3, 4-3 & 5-3; para.[0001] & [0002]; para.[0033] & [0034]; para. [0035]; para.[0037]-[0040]; figure 1 * | 1-15 | INV. C04B35/26 C04B35/64 C01G49/00 H01F1/34 |
| X | EP 3 187 475 A1 (HITACHI METALS LTD [JP]) 5 July 2017 (2017-07-05) * sample 36 in Tables 5 & 6; example 3 with reference to example 1; figure 1; para. [0001], [0002]; para.[0028]; para.[0035] * | 1-15 | |
| X,D | JP 2001 220146 A (HITACHI METALS LTD) 14 August 2001 (2001-08-14) * examples 17-19 in table * | 1-15 | |
| X | EP 1 083 158 A2 (TDK CORP [JP]) 14 March 2001 (2001-03-14) * table 5: samples nos. 78 & 83 * | 1-15 | |
| A | EP 3 441 995 A1 (HITACHI METALS LTD [JP]) 13 February 2019 (2019-02-13) * examples and tables - sample no. 31 in table 3 * | 1-15 | TECHNICAL FIELDS SEARCHED (IPC) C04B C01G H01F |

The present search report has been drawn up for all claims

| Place of search | Date of completion of the search | Examiner |
|---|---|---|
| Munich | 1 August 2023 | Munro, Brian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 4516

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2023

| Patent document cited in search report | | Publication date | Patent family member(s) | | Publication date |
|---|---|---|---|---|---|
| EP 3594193 | A1 | 15-01-2020 | CN | 110494408 A | 22-11-2019 |
| | | | EP | 3594193 A1 | 15-01-2020 |
| | | | JP | 6562183 B2 | 21-08-2019 |
| | | | JP | WO2018181242 A1 | 11-07-2019 |
| | | | KR | 20190127785 A | 13-11-2019 |
| | | | TW | 201840512 A | 16-11-2018 |
| | | | US | 2020373047 A1 | 26-11-2020 |
| | | | WO | 2018181242 A1 | 04-10-2018 |
| EP 3187475 | A1 | 05-07-2017 | CN | 106660883 A | 10-05-2017 |
| | | | EP | 3187475 A1 | 05-07-2017 |
| | | | JP | 6451742 B2 | 16-01-2019 |
| | | | JP | WO2016032001 A1 | 20-07-2017 |
| | | | KR | 20170044130 A | 24-04-2017 |
| | | | US | 2017278607 A1 | 28-09-2017 |
| | | | WO | 2016032001 A1 | 03-03-2016 |
| JP 2001220146 | A | 14-08-2001 | JP | 4761175 B2 | 31-08-2011 |
| | | | JP | 2001220146 A | 14-08-2001 |
| EP 1083158 | A2 | 14-03-2001 | CN | 1287985 A | 21-03-2001 |
| | | | EP | 1083158 A2 | 14-03-2001 |
| | | | JP | 2001080952 A | 27-03-2001 |
| EP 3441995 | A1 | 13-02-2019 | CN | 108780697 A | 09-11-2018 |
| | | | EP | 3441995 A1 | 13-02-2019 |
| | | | JP | 6962315 B2 | 05-11-2021 |
| | | | JP | 7089686 B2 | 23-06-2022 |
| | | | JP | 7248172 B2 | 29-03-2023 |
| | | | JP | 2022003690 A | 11-01-2022 |
| | | | JP | 2022122983 A | 23-08-2022 |
| | | | JP | WO2017164350 A1 | 07-02-2019 |
| | | | TW | 201802034 A | 16-01-2018 |
| | | | US | 2019062217 A1 | 28-02-2019 |
| | | | WO | 2017164350 A1 | 28-09-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017164350 A

- JP 2001220146 A